# EUROPÄISCHE PATENTSCHRIFT

(11) **EP 2 930 804 B1**
(45) Veröffentlichungstag und Bekanntmachung des Hinweises auf die Patenterteilung: **21.06.2017**
(21) Anmeldenummer: 15305392.1
(22) Anmeldetag: 17.03.2015
(51) Int. Cl.: H02B 3/00, H02B 13/00

(54) **VERFAHREN ZUM BETREIBEN EINER SCHALTANLAGE**
METHOD FOR OPERATING A SWITCH ASSEMBLY
PROCÉDÉ DESTINÉ À L'EXPLOITATION D'UNE INSTALLATION DE COMMUTATION

(30) Priorität: 11.04.2014 DE 102014105179
(43) Veröffentlichungstag der Anmeldung: 14.10.2015
(73) Patentinhaber: Schneider Electric Industries SAS, 92500 Rueil-Malmaison (FR)
(72) Erfinder: Zimmerer, Rudolf, 93192 Wald (DE)
(74) Vertreter: Manitz Finsterwald Patentanwälte PartmbB

(56) Entgegenhaltungen:
- WO-A1-2006/006944
- JP-A- 2008 245 409
- US-A1- 2010 195 273
- SIEMENS: "Leistungsschalter-Festeinbauanlagen Typ NXPLUS C bis 24 kV, gasisoliert; MITTELSPANNUNGSANLAGEN . KATALOG HA 35.41-2012", SIEMENS KATALOG, 2. April 2012 (2012-04-02), XP055209781,

## Beschreibung

Die vorliegende Erfindung betrifft ein Verfahren zum Betreiben einer Schaltanlage der Mittel- oder Hochspannungstechnik, die mehrere Schaltfelder umfasst, welche über zumindest eine feststoffisolierte Sammelschienen miteinander in elektrisch leitender Verbindung stehen, und ein Stützelement sowie einen Sammelschienenverschluss.

Bei derartigen Schaltanlagen sind üblicherweise mehrere Einzelschaltfelder nebeneinander in einer Reihe aufgestellt und über feststoffisolierte Sammelschienen, üblicherweise eine Sammelschiene für jede Phase, miteinander elektrisch leitend verbunden. Eine feststoffisolierte Sammelschiene besteht in bekannter Weise aus einer einpolig-isolierten Stromschiene, wobei die Isolierung aus Feststoff, z.B. ein Elastomermaterial auf Silikonbasis besteht. Die Stromschiene wird jeweils über Adapter mit einem Schaltfeld verbunden. Die Adapter, sogenannte End- oder Kreuzadapter, je nachdem ob diese am entsprechenden Schaltanlagenende oder mittig angeordnet sind, werden ebenfalls mit einer Feststoffisolierung ausgeführt, identisch der vorher genannten Stromschiene. Die Verbindung mit den Schaltgeräten in einem Schaltfeld, zum Beispiel einem gasisolierten Schaltfeld, erfolgt über Durchführungen, wobei diese sowohl die elektrischen Verbindung zwischen den Schaltgeräten im Schaltfeld und der Sammelschiene ermöglichen, als auch die Sammelschiene mechanisch am Schaltfeld befestigen. Eine Durchführung am Schaltfeld besteht in der Regel ebenfalls aus einer Feststoffisolierung, zum Beispiel aus Epoxy, EPDM oder Silikon und einem integrierten Hochspannungsleiter. Der Anschluss des Stromschiene und des zugehörigen Adapters an die Durchführung erfolgt durch ein bekanntes und genormtes Außenkonus-Anschlusssystem.

Die Stromschiene wird dabei mittels Klemmkontakte in den Adaptern mit dem integrierten Hochspannungsleiter der Durchführung verschraubt. Die elektrische Isolierung der Verbindungsstellen, bekannt als "Edelfuge" wird an der Außenkonusoberfläche durchgeführt.

Wenn bei derartigen Schaltanlagen festgestellt wird, dass eines der Schaltfelder fehlerbehaftet ist, weil der Leistungsschalter Fehlfunktion aufweist oder ein innerer Fehler (Lichtbogen) aufgetreten ist, so muss die Schaltanlage stromlos geschaltet werden, damit das fehlerbehaftete Schaltfeld ausgebaut und repariert oder ersetzt werden kann. Hierzu ist es erforderlich, dass die Sammelschienen zumindest im Bereich des auszutauschenden Schaltfeldes demontiert werden, so dass keine (elektrisch leitende) Verbindung mehr zwischen den verbleibenden Schaltfeldern vorhanden ist. Dies bedeutet, dass die Schaltanlage so lange außer Betrieb bleiben muss, bis das reparierte oder neue Schaltfeld wieder eingebaut werden kann.

Der Betrieb bzw. die Inbetriebnahme von Schaltanlagen kann auch durch Ereignisse eingeschränkt sein: Schaltanlagen bestehen in der Regel aus mehreren und unterschiedlichen Schaltfeldern, zum Beispiel Einspeisefelder, Abgangsfelder oder Kupplungen. Können Schaltanlagen nicht vollständig ausgeliefert und aufgestellt werden, infolge technischer Schwierigkeiten, weil beispielsweise ein Schaltfeld mit Sonderausführungen erst später nachgeliefert wird, so verzögert sich die Inbetriebnahme der kompletten Schaltanlage.

Aus der Siemens-Druckschrift Mittelspannungsanlagen Katalog HA 35.41 2012 "Leistungsschalter-Festeinbauanlagen Typ NXPLUS C bis 24 kV, gasisoliert" ist eine Sammelschiene mit einem Kreuzadapter bzw. Kreuzkoppeladapter bekannt, wobei Kabel-T-Stecker vorgesehen sind, die einen Blindstecker aufweisen.

Die US 2010/195273 A1 offenbart vakuumisolierte Schaltanlagen mit Sammelschienen.

Es ist die Aufgabe der vorliegenden Erfindung, ein Verfahren zum Betreiben einer Schaltanlage der vorstehend beschriebenen Art derart weiterzubilden, dass die Ausfallzeit der Schaltanlage minimiert ist.

Die Lösung dieser Aufgabe erfolgt durch die Merkmale der Ansprüche 1 und 2 und insbesondere dadurch, dass die Sammelschiene nach dem Ausbau des fehlerbehafteten Schaltfeldes wieder elektrisch leitend montiert wird, indem anstelle des ausgebauten Schaltfeldes ein Sammelschienenverschluss mit den Sammelschienen verbunden wird, der eine elektrisch leitende Montage der vorhandenen Sammelschiene ermöglicht, und dass die Schaltanlage nach Montage der Sammelschiene ohne das fehlerbehaftete Schaltfeld wieder in Betrieb genommen wird.

Bei Demontage eines Schaltfeldes aus dem Schaltanlagenverbund können die feststoffisolierten Sammelschienen an dieser Stelle beispielsweise ersetzt werden durch Sonderausführungen, die die Lücke überbrücken und sich erst an den beiden Nachbarfeldern an der vorgesehenen Stelle wieder abstützen. Insbesondere bedingt durch verschiedene Schaltfeldausführungen mit unterschiedlichen Schaltfeldbreiten (z. B. abhängig vom Bemessungsstrom) müssen immer verschiedene Sonderausführungen der Sammelschiene vorgehalten oder berücksichtigt werden. Ferner kann mit dieser Lösung maximal nur ein Schaltfeld überbrückt werden. Sind mehrere Schaltfelder betroffen, kann diese Lösung nicht verwendet werden und die Schaltanlage bleibt außer Betrieb bis Ersatzschaltfelder verfügbar sind.

Vorteilhaft bei der erfindungsgemäßen Ausführung ist, dass keine speziellen Sonderausführungen für das Sammelschienensystem erforderlich sind, sondern mit den bereits vorhandenen, ursprünglichen Sammelschienen der Betrieb der Schaltanlage ermöglicht wird. Die erfindungsgemäße Ausführung kann grundsätzlich auch bei Ausfall mehrerer Schaltfelder oder als Platzhalter für mehrere Schaltfelder verwendet werden. Der isolierte Sammelschienenverschluss ist dabei immer identisch ausgeführt. Nur die Abstützung bzw. Befestigung mit den Nachbarfeldern muss angepasst werden. Die Abstützung kann auch unabhängig von den Nachbarfeldern ausgeführt werden und beispielsweise direkt am Schaltanlagenboden über eine geeignete Befestigungsausführung erfolgen.

Bei der erfindungsgemäßen Ausführung ermöglicht die Verwendung des Sammelschienenverschlusses nach Entfernen eines Schaltfeldes die ordnungsgemäße Montage der die verbleibenden Schaltfelder verbindenden Sammelschienen, wobei durch ein Stützelement sichergestellt werden kann, dass die auf die Sammelschienen wirkenden mechanischen und elektrodynamischen Kräfte ausreichend aufgenommen werden. Da im Betrieb elektrodynamische Kräfte zwischen den parallel verlaufenden Sammelschienen auftreten können, muss sichergestellt sein, dass diese Kräfte nicht zu einer Beschädigung des Sammelschienensystems führen. Bei ordnungsgemäß an Schaltfeldern montierten Sammelschienen werden die Kräfte durch das Schaltfeld selbst aufgenommen. Wenn die Sammelschienen jedoch frei über eine gewisse Länge geführt werden, so muss sichergestellt sein, dass sich die Sammelschienen im Betrieb nicht relativ zueinander bewegen können, was durch die Verwendung des Stützelements gewährleistet ist.

Mit dem erfindungsgemäßen Verfahren kann eine Schaltanlage nach Ausbau eines Schaltfeldes sofort wieder in Betrieb genommen werden, nachdem der Sammelschienenverschluss anstelle des Schaltfeldes mit den Sammelschienen verbunden worden ist, was die Ausfallzeit der Schaltanlage auf ein Minimum reduziert.

Bei der elektrischen Schaltanlage, in der der Sammelschienenverschluss eingesetzt wird, kann es sich um eine dreipolige Schaltanlage handeln. Es versteht sich, dass die elektrische Schaltanlage aber auch zweipolig oder einpolig ausgebildet sein kann.

Vorteilhafte Ausführungsformen der Erfindung sind in der Beschreibung, der Zeichnung sowie den Unteransprüchen beschrieben.

Bei einer ersten vorteilhaften Ausführungsform kann der zur Verwendung in einem der vorstehenden Verfahren geeignete Sammelschienenverschluss einen Grundkörper insbesondere mit einem Außenkonus aufweisen, in den an der Oberseite ein Innengewinde eingebracht ist, wobei das Innengewinde gegenüber dem Außenumfang und der Unterseite des Grundkörpers elektrisch isoliert ist. Ein solcher Sammelschienenverschluss kann wie eine herkömmliche Außenkonus-Durchführung eines Schaltfeldes an einer Sammelschiene montiert werden, indem ein Gewindebolzen in das Innengewinde eingeschraubt wird. Allerdings ist danach erfindungsgemäß die Anschlussstelle elektrisch isoliert, da das Innengewinde gegenüber dem Außenumfang und der Unterseite des Grundkörpers elektrisch isoliert ist.

Nach einer weiteren vorteilhaften Ausführungsform kann das Innengewinde in einen Gewindeeinsatz eingebracht sein, der in den Grundkörper eingesetzt ist. Ein solcher Gewindeeinsatz kann ähnlich einer Gewindemutter ausgebildet sein, die in den Grundkörper, der beispielsweise aus Isolierstoff besteht, eingegossen ist. Alternativ ist es möglich, den Gewindeeinsatz aus einem Isolierstoff herzustellen oder aber einstückig mit dem Grundkörper auszubilden. Bei letzterer Ausführungsform ist also das Innengewinde direkt in den Grundkörper eingebracht, der vollständig aus Isolierstoffmaterial besteht.

Nach einer weiteren vorteilhaften Ausführungsform weist der Sammelschienenverschluss ein Befestigungsmittel für ein Stützelement auf, das durch einen Befestigungsflansch gebildet ist. Alternative Befestigungsmittel sind Befestigungszapfen oder angegossene Gewindezapfen oder dergleichen. Auf diese Weise kann der Sammelschienenverschluss mit einem Stützelement verbunden werden und dadurch die Sammelschiene im Bereich einer Lücke zwischen zwei benachbarten Schaltfeldern abstützen.

Nach einem weiteren Aspekt der Erfindung betrifft diese ein Stützelement, das einen Stützkörper aufweist, an dem zumindest ein Sammelschienenverschluss der vorstehend beschriebenen Art vorgesehen ist. Ein Stützkörper kann beispielsweise im einfachsten Fall eine Trägerschiene aufweisen, die auf zwei mit Abstand benachbarte Felder aufgelegt werden kann und die dann über den an ihr befestigten Sammelschienenverschluss die Sammelschiene abstützt.

Das Stützelement kann also auf mindestens einem benachbarten Schaltfeld, bevorzugt auf beiden benachbarten Schaltfeldern, abgestützt werden. Dies trägt zusätzlich zu einer mechanischen Stabilität bei, da das Stützelement die Sammelschienen auch in vertikaler Richtung abstützt, so dass sich diese im Betrieb weder durchbiegen noch durch elektrodynamische Kräfte ungewünscht bewegen.

Nach einer alternativen Ausführungsform kann ein Stützelement verwendet werden, das zumindest einen Isolierstoffkörper aufweist, an dem insbesondere im Abstand der Sammelschienenanschlüsse des ausgebauten Schaltfeldes Sammelschienenverschlüsse vorgesehen sind. Auf diese Weise ist die Montage des Stützelements erleichtert, da die entsprechend beabstandeten Sammelschienenverschlüsse, die an dem Stützelement vorgesehen sind, automatisch für eine korrekte Justierung des Stützelements und der mit diesem verbundenen Stromschienen sorgt.

Nach einem weiteren Aspekt der vorliegenden Erfindung betrifft diese ein Stützelement insbesondere zur Verwendung in einem Verfahren der vorstehend beschriebenen Art, wobei das Stützelement einen Stützkörper umfasst, an dem mehrere Sammelschienenverschlüsse für feststoffisolierte Sammelschienen vorgesehen sind, wobei der Stützkörper und/oder die Sammelschienenverschlüsse elektrisch isolierend sind.

Mit einem solchen Stützelement kann eine rasche und zuverlässige Montage erfolgen, wobei gleichzeitig den Anforderungen an eine elektrische Isolierung Folge geleistet ist. Hierbei besteht die Möglichkeit, das Stützelement elektrisch isolierend und die Sammelschienenverschlüsse elektrisch leitend auszubilden, beispielsweise indem die Sammelschienenverschlüsse in ein Stützelement aus Kunststoff eingegossen werden. Umgekehrt ist es auch möglich, elektrisch isolierende Sammelschienenverschlüsse an einem Stützelement aus Metall zu befestigen. Schließlich könnten auch das Stützelement und die Sammelschienenverschlüsse aus einem elektrisch nicht leitenden Material hergestellt werden.

Die Sammelschienenverschlüsse können einen Außenkonus aufweisen, der an dem Stützelement befestigt ist, beispielsweise durch Vergießen oder Verschrauben.

Der Stützkörper kann je nach Schaltanlagenausführung metallisch, beispielsweise mit Blechen oder in Kunststoffbauweise für die Aufnahme von einem oder mehreren Sammelschienenverschlüssen ausgeführt werden. Das Stützelement bzw. der Sammelschienenverschluss kann in geeigneter Weise an den Nachbarfeldern befestigt werden und kann Verstellmöglichkeiten besitzen, um unterschiedliche Feldbreiten auszugleichen. Der Sammelschienenverschluss oder das Stützelement kann aber auch unabhängig von den Nachbarfeldern, beispielsweise am Schaltanlagenboden direkt an Befestigungspunkten des vorgesehenen Schaltfeldes befestigt werden. Diese Anforderung kann sich zum Beispiel ergeben, wenn die beanspruchte Vorrichtung als Platzhalter für eine spätere Nachlieferung von Schaltfeldern dient.

Vorteilhaft ist dabei, wenn die Positionierung der Sammelschienenverschlüsse durch das Stützelement so ausgeführt wird, dass die Verbindungsstelle zwischen dem Adapter der Sammelschiene und dem Sammelschienenverschluss sich an der gleichen Stelle befindet, wie im Falle eines vorgesehenen Schaltfelds.

Nach einer weiteren vorteilhaften Ausführungsform kann der Sammelschienenverschluss oder das Stützelement zumindest einen Stützträger zur Abstützung auf benachbarten Schaltfeldern aufweisen. Durch Vorsehen eines solchen Stützträgers kann das Stützelement oder der Sammelschienenverschluss auf einfache Weise in einer Lücke zwischen zwei benachbarten Schaltfeldern positioniert werden, indem der Stützträger auf zwei Schaltfelder zu beiden Seiten des entfernten Schaltfeldes aufgelegt wird.

Weiterhin kann es vorteilhaft sein, wenn der Stützkörper quaderförmig ausgebildet ist, da eine solche Bauform an die geometrische Form der Lücke eines (entfernten) Schaltfeldes angepasst ist. Wenn dabei die Breite des quaderförmigen Körpers kleiner als die Breite des kleinsten Schaltfeldes der Schaltanlage gewählt wird, lässt sich das Stützelement für sämtliche Schaltfeldbreiten einsetzen.

Nach einer weiteren vorteilhaften Ausführungsform weist das Stützelement oder der Sammelschienenverschluss zumindest einen Stützträger zur Abstützung auf benachbarten Schaltfeldern auf, dessen Länge größer als die des ausgebauten Schaltfeldes ist. Auf diese Weise ist für eine sichere Auflage auf benachbarten Schaltfeldern gesorgt.

Nach einer weiteren vorteilhaften Ausführungsform kann der Stützträger ein U-Profil aufweisen, das auf ein Trägerprofil des Schaltfeldes aufsetzbar ist. Auf diese Weise ist alleine durch Aufsetzen des Stützelements auf die benachbarten Schaltfelder bereits für eine korrekte Positionierung des Stützelements gesorgt, so dass die nachfolgende Montage der Sammelschienen besonders rasch und einfach erfolgen kann.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine schematische Vorderansicht einer Schaltanlage mit mehreren Schaltfeldern, wobei eines der Schaltfelder ausgebaut und durch ein Stützelement mit Sammelschienenverschlüssen ersetzt ist;
- Fig. 2: eine Schnittansicht durch ein Stützelement mit Sammelschienenverschlüssen; und
- Fig. 3: einen Sammelschienenverschluss.

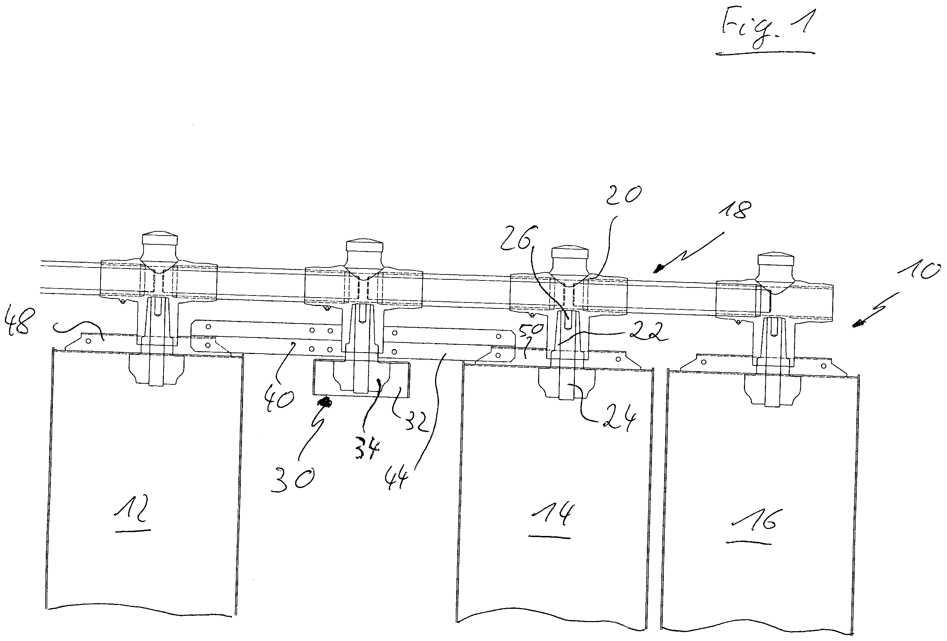

Fig. 1 zeigt eine stark vereinfachte Vorderansicht einer üblichen 3-phasigen Schaltanlage 10 der Mittel- oder Hochspannungstechnik, die mehrere nebeneinander angeordnete Schaltfelder 12, 14 und 16 umfasst, die bevorzugt hermetisch gekapselt sind und die außen über feststoffisolierte Sammelschienen elektrisch miteinander in leitender Verbindung stehen, wobei in Fig. 1 lediglich die vorderste Sammelschiene 18 erkennbar ist.

Die vorliegende Erfindung eignet sich besonders für hermetisch gekapselte Schaltanlagen, also zum einen gasisolierte Schaltfelder, die mit einem Isoliergas, z.B. mit SF6 oder mit trockener Luft, befüllt sind. Es sind aber auch alle anderen geeigneten Isoliergase vorstellbar, z.B. Mischungen mit Luft und geeigneten Fluoroketonen denkbar. Alternativ ist es möglich, dass die Gehäuse flüssigkeitsdicht verschlossen und mit einer Isolierflüssigkeit gefüllt sind, oder dass eine Feststoffisolation, z. B. Epoxidharz, Silikon oder EPDM vorgesehen ist, oder dass es sich um luftisolierte Schotträume handelt. Es versteht sich, dass auch Kombinationen hiervon möglich sind.

Die feststoffisolierte Sammelschiene 18 umfasst auf bekannte Weise einzelne Sammelschienenabschnitte, die jeweils über Kreuzadapter 20 miteinander und mit einem Schaltfeld verbunden sind. Als Sammelschienenanschluss an einem jeweiligen Schaltfeld dient bei dem dargestellten Ausführungsbeispiel eine Durchführung 22 mit einem Außenkonus-Anschlusssystem. Die Durchführung 22 besteht aus einem Isoliermaterial, z.B. Epoxidmaterial, und einem integrierten Hochspannungsleiter 24 aus Kupfer, der mit dem Kreuzadapter 20 über einen Gewindebolzen (nicht dargestellt) mit der Durchführung am Schaltfeld an der Position 26 verschraubt ist.

Wie Fig. 1 verdeutlicht, ist bei der dargestellten Schaltanlage 10 eines der Schaltfelder, nämlich das zwischen den Schaltfeldern 12 und 14 ursprünglich befindliche Schaltfeld ausgebaut worden, nachdem festgestellt wurde, dass dieses fehlerbehaftet ist, beispielsweise gewartet werden muss. Um dennoch die Schaltanlage wieder rasch in Betrieb nehmen zu können, sind die Sammelschienen der Schaltanlage nach Entfernen des Schaltfeldes wieder miteinander elektrisch leitend verbunden worden, indem anstelle des ausgebauten Schaltfeldes ein Stützelement 30 mit Sammelschienenverschlüssen (in Fig. 1 ist nur der Sammelschienenverschluss 34 zu sehen) mit den Sammelschienen verbunden worden ist, die eine elektrisch leitende Montage der Sammelschienen in dem in Fig. 1 dargestellten Zustand ermöglicht, wobei gleichzeitig sichergestellt ist, dass die Sammelschienen im Bereich des entfernten Schaltfeldes nach außen isoliert sind.

Die Sammelschienenverschlüsse sind auf einem Stützkörper 32 montiert, der mittels Stützträgern 40 und 44 an den Nachbarfeldern befestigt werden kann und er besitzt Verstellmöglichkeiten, um unterschiedliche Feldbreiten auszugleichen.

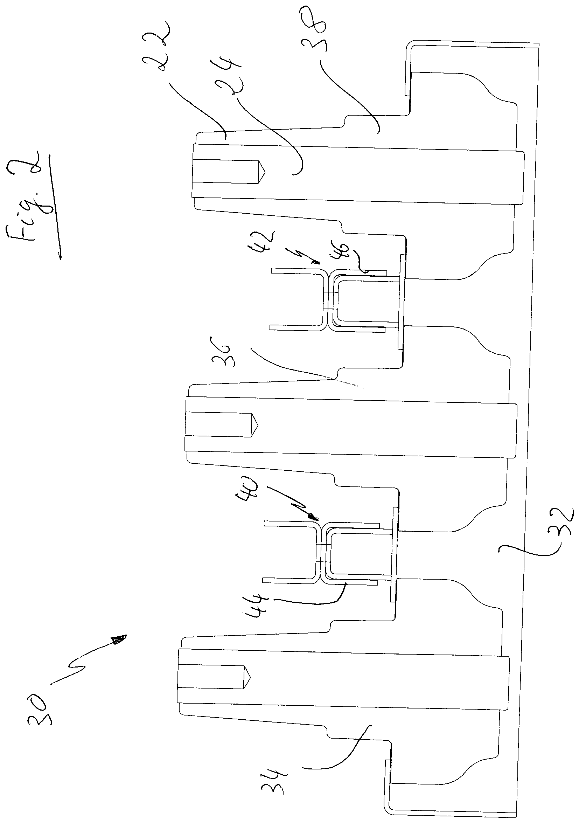

Fig. 2 zeigt eine Schnittansicht durch das Stützelement 30, das beim dargestellten Ausführungsbeispiel für eine 3-phasige Schaltanlagenausführung einen quaderförmigen Stützkörper 32 aus Blech aufweist, an dem drei Sammelschienenverschlüsse 34, 36 und 38 befestigt sind. Hierbei sind die Sammelschienenverschlüsse 34, 36 und 38 im Abstand der Sammelschienenanschlüsse des ausgebauten Schaltfeldes angeordnet, d.h. die Sammelschienenverschlüsse weisen den gleichen Abstand zueinander auf wie die Sammelschienen 18 der Schaltanlage (Phasenabstand eines dreiphasigen Anschlusssystems).

Ein wesentlicher Vorteil der Sammelschienenverschlüsse 34, 36 und 38 ist, dass diese nahezu vollständig identisch sind mit den Durchführungen im vorgesehenen Schaltfeld. Dadurch können für die Sammelschienenverschlüsse 34, 36 und 38 sowohl die gleichen Werkstoffe als auch die gleiche Fertigungstechnik angewendet werden. Beispielsweise können die Sammelschienenverschlüsse aus Epoxidmaterial mit derselben Gussform hergestellt werden. Nur der eingegossene, metallischen Hochspannungsleiter in der normalen Schaltfelddurchführung kann im Sammelschienenverschluss durch ein isolierendes, eingebettetes Element, in der Regel bestehend aus einem geeigneten Kunststoff oder Hartgewebe, vollständig nachgebildet und ersetzt werden.

Wie die Fig. 1 und 2 verdeutlichen, sind an der Oberseite des Stützkörpers 32 des Stützelements 30 zwei Stützträger 40 und 42 vorgesehen, mit denen das Stützelement 30 auf den beiden benachbarten Schaltfeldern 12 und 14 abgestützt ist. Bei dem dargestellten Ausführungsbeispiel weisen die Stützträger bzw. Querträger 40 und 42 ein nach unten offenes U-Profil 44 und 46 auf, das mit dem Stützkörper 32 verbunden ist. Hierdurch ist es möglich, die U-Profile 44 und 46 auf Trägerprofile 48 und 50 aufzusetzen, die an der Oberseite der Schaltfelder 12 und 14 vorgesehen sind. Auf diese Weise ist automatisch eine korrekte Positionierung des Stützelements 30 erfolgt, so dass die Montage der Sammelschienen 18 besonders schnell und einfach erfolgen kann.

Wie hierbei Fig. 1 verdeutlicht, ist die Länge der Stützträger 40, 42 größer als die Breite des entfernten Schaltfeldes, so dass die Stützträger 40 und 42 sicher zu beiden Seiten der Lücke des entfernten Schaltfeldes auf die benachbarten Schaltfelder 12 und 14 aufgelegt werden können. Weiterhin dienen die Stützträger 40 und 42 zur mechanischen Befestigung der benachbarten Schaltfelder 12 und 14, beispielsweise durch Verschrauben der U-Profile 40 und 46 mit den Trägerprofilen 48 und 50.

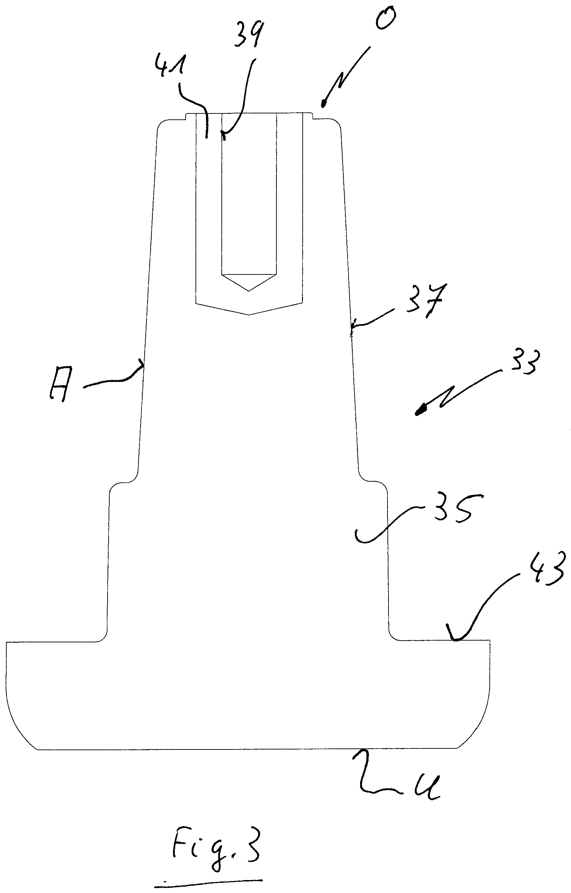

Fig. 3 zeigt einen Sammelschienenverschluss 33 mit einem durchgehenden Grundkörper 35 aus Isolierstoff mit den entsprechenden Anschlussabmessungen für ein Außenkonus-Anschlusssystem zur Befestigung an feststoffisolierten Sammelschienen. Der Grundkörper 35 ist mit einem Außenkonus 37 versehen, in den an der Oberseite O eine Innengewinde 39 eingebracht ist, wobei das Innengewinde 39 gegenüber dem Außenumfang A und der Unterseite U des Grundkörpers 35 elektrisch isoliert ist. Bei der dargestellten Ausführungsform ist das Innengewinde 39 in einen Gewindeeinsatz 41 eingebracht, der in den Grundkörper 35 eingesetzt ist, beispielsweise durch Vergießen. Der Grundkörper 35 besteht bei dem dargestellten Ausführungsbeispiel aus Isolierstoff. Der Gewindeeinsatz 41 kann entweder aus Metall oder ebenfalls aus einem Isolierstoff bestehen.

Wie Fig. 3 zeigt, erstreckt sich der Gewindeeinsatz 41 nur etwa bis ins obere Drittel des Sammelschienenverschlusses 33 und nicht wie bei herkömmlichen Außenkonusdurchführungen bis zur Unterseite U des Grundkörpers 35. Hierdurch ist das Innengewinde 39, das zur Verschraubung mit einer Sammelschiene dient, gegenüber dem Außenumfang A und der Unterseite U des Sammelschienenverschlusses 33 vollständig elektrisch isoliert.

Weiterhin weist der Sammelschienenverschluss 33 ein Befestigungsmittel für ein Stützelement auf, und zwar in Form eines umlaufenden Befestigungsflansches 43. Über diesen Befestigungsflansch 43 kann der Sammelschienenverschluss 33 an einem geeigneten Stützelement, beispielsweise dem Stützkörper 32 von Fig. 1 und 2, aber auch an einem anderen geeigneten Stützkörper befestigt werden.

Nach einer weiteren Ausführungsform überbrückt die Sammelschiene 18 ein vorhandenes Schaltfeld, wobei die Sammelschiene 18 über einen Sammelschienenverschluss 33 - 38 elektrisch leitend verbunden ist und sich am Schaltfeld abstützt.

## Patentansprüche

1. Verfahren zum Betreiben einer Schaltanlage (10) der Mittel- oder Hochspannungstechnik, die mehrere Schaltfelder (12, 14, 16) umfasst, welche über zumindest eine feststoffisolierte Sammelschiene (18) miteinander in elektrisch leitender Verbindung stehen, wobei die Schaltanlage (10) bei Feststellen eines fehlerbehafteten Schaltfeldes stromlos geschaltet wird, das fehlerbehaftete Schaltfeld nach Demontage der dieses elektrisch verbindenden Sammelschiene (18) ausgebaut, repariert und wieder eingebaut wird,
**dadurch gekennzeichnet, dass**
die gleiche Sammelschiene (18) nach dem Ausbau des fehlerbehafteten Schaltfeldes wieder elektrisch leitend montiert wird, indem anstelle des ausgebauten Schaltfeldes ein Sammelschienenverschluss (34 - 38) an der Sammelschienen (18) befestigt wird, der eine elektrisch leitende Montage der Sammelschiene ermöglicht, und dass die Schaltanlage (10) nach Montage der Sammelschiene ohne das fehlerbehaftete Schaltfeld wieder in Betrieb genommen wird.

2. Verfahren zur Inbetriebnahme einer Schaltanlage (10) der Mittel- oder Hochspannungstechnik, die mehrere nebeneinander angeordnete Schaltfelder (12, 14, 16) umfasst, welche über zumindest eine feststoffisolierte Sammelschiene (18) miteinander in elektrisch leitender Verbindung stehen,
**dadurch gekennzeichnet, dass**
in der Schaltanlage (10) eine Lücke in der Breite zumindest eines vorgesehenen Schaltfeldes gebildet ist, und wobei für eine Inbetriebnahme der Schaltanlage die Sammelschiene (18) im Bereich der Lücke elektrisch leitend montiert wird, indem anstelle des zumindest einen Schaltfeldes ein Sammelschienenverschluss (34 - 38) an der Sammelschiene (18) befestigt wird, der eine elektrisch leitende Montage der Sammelschiene ermöglicht.

3. Verfahren nach Anspruch 1 oder 2,
**dadurch gekennzeichnet, dass**
der Sammelschienenverschluss (34 - 38) auf mindestens einem benachbarten Schaltfeld (12, 14) abgestützt wird.

4. Verfahren nach Anspruch 1, 2 oder 3,
**dadurch gekennzeichnet, dass**
ein Stützelement (30) verwendet wird, das den zumindest einen Sammelschienenverschluss (34 - 38) aufweist.

5. Verwendung eines Sammelschienenverschlusses (33 - 38) bestehend aus einem Grundkörper, in den an der Oberseite ein Innengewinde eingebracht ist, wobei das Innengewinde gegenüber dem Außenumfang und der Unterseite des Grundkörpers elektrisch isoliert ist, in einem Verfahren nach zumindest einem der vorstehenden Ansprüche.

6. Verwendung eines Sammelschienenverschlusses (33 - 38) bestehend aus einem Grundkörper, der aus Isolierstoff besteht mit einem mittig liegenden Anschlussgewinde (39) zur Verschraubung mit der Sammelschiene (18) in einem Verfahren nach zumindest einem der vorstehenden Ansprüche 1 - 4.

7. Verwendung nach Anspruch 5 oder 6,
**dadurch gekennzeichnet, dass**
das Innengewinde (39) in einen Gewindeeinsatz (41) eingebracht ist, der in den Grundkörper (37) eingesetzt ist, der aus Isolierstoff besteht.

8. Verwendung nach Anspruch 5, 6 oder 7,
**dadurch gekennzeichnet, dass**
der Sammelschienenverschluss mit Grundkörper, Anschlussgewinde und Anschlusskonus identisch aufgebaut ist wie die elektrische Durchführung (22) im vorgesehenen Schaltfeld, wobei der Hochspannungsleiter durch ein gleichartiges Element aus Isolierstoff (24) ersetzt wird.

9. Verwendung nach zumindest einem der Ansprüche 5 - 8,
**dadurch gekennzeichnet, dass**
der Sammelschienenverschluss (33 - 38) ein Befestigungsmittel (43) für ein Stützelement aufweist.

10. Verwendung nach zumindest einem der Ansprüche 5 - 9,
**dadurch gekennzeichnet, dass**
der Sammelschienenverschluss (33 - 38) einen Anschlusskonus (37) aufweist, der so ausgeführt ist, um die Öffnung in einem Adapter (20) der feststoffisolierten Sammelschiene dicht und elektrisch isoliert zu verschließen.

11. Sammelschienenverschluss (33 - 38) zur Verwendung in einem Verfahren nach einem der Ansprüche 1-4 bestehend aus einem Grundkörper (35), in den an der Oberseite ein Innengewinde (39) eingebracht ist, wobei das Innengewinde gegenüber dem Außenumfang und der Unterseite des Grundkörpers (35) elektrisch isoliert ist, oder der aus einem Grundkörper aus Isolierstoff besteht, der mit einem mittig liegenden Anschlussgewinde (39) zur Verschraubung mit der Sammelschiene (18) versehen ist, **dadurch gekennzeichnet, dass**
der Sammelschienenverschluss (33 - 38) einen Befestigungsflansch (43) als Befestigungsmittel für Montage in einem Stützelement aufweist.

12. Stützelement (30), umfassend
einen Stützkörper (32), an dem zumindest ein Sammelschienenverschluss (34 - 38) nach Anspruch 11 befestigt ist.

13. Stützelement nach Anspruch 12,
**dadurch gekennzeichnet, dass**
dieses zumindest einen Stützträger (40, 42) zur Abstützung des Stützelementes (30) auf benachbarten Schaltfeldern (12, 14) aufweist.

14. Kombination zumindest eines Schaltfeldes für eine Schaltanlage der Mittel- oder Hochspannungstechnik und eines Stützelementes nach zumindest einem der vorstehenden Ansprüche 12 oder 13 mit mehreren Sammelschienenverschlüssen (33 - 38),
**dadurch gekennzeichnet, dass**
die Sammelschienenverschlüsse (33 - 38) des Stützelementes (30) im Abstand der Sammelschienenanschlüsse des vorgesehenen Schaltfeldes an dem Stützkörper (30) vorgesehen sind.

15. Kombination nach Anspruch 14,
**dadurch gekennzeichnet, dass**
das Stützelement (30) zumindest einen Stützträger (44, 46) zur Abstützung des Stützelementes (30) auf benachbarten Schaltfeldern (12, 14) aufweist, dessen Länge größer als die Breite des Schaltfeldes ist.

16. Kombination nach Anspruch 15,
**dadurch gekennzeichnet, dass**
der Stützträger (40, 42) ein U-Profil (44, 46) aufweist, das auf ein Trägerprofil (48, 50) des Schaltfeldes aufsetzbar ist.

## Claims

1. A method for the operation of a switchgear (10) of medium-voltage technology or high-voltage technology which comprises a plurality of control panels (12, 14, 16) which are electrically conductively connected to one another via at least one busbar (18) insulated by a solid, wherein the switchgear (10) is de-energized on the detection of a defective control panel, and wherein the defective control panel is removed, repaired and reinstalled after the dismantling of the busbar (18) which connects it in an electrically conductive manner,
**characterized in that**
the same busbar (18) is again assembled in an electrically conductive manner after the removal of the defective control panel **in that**, instead of the removed control panel, a busbar closure (34 - 38) is fastened to the busbar (18) and allows an electrically conductive assembly of the busbar; and **in that** the switchgear (10) is put back into operation without the defective control panel after the assembly of the busbar.

2. A method for the putting into operation of a switchgear (10) of medium-voltage technology or high-voltage technology which comprises a plurality of control panels (12, 14, 16) which are arranged next to one another and which are electrically conductively connected to one another via at least one busbar (18) insulated by a solid,
**characterized in that**
a gap having a width of at least one intended control panel is formed in the switchgear (10); and **in that** the busbar (18) is electrically conductively assembled in the region of the gap for a putting into operation of the switchgear **in that**, instead of the at least one control panel, a busbar closure (34 - 38) is fastened to the busbar (18) and allows an electrically conductive assembly of the busbar.

3. A method in accordance with claim 1 or claim 2,
**characterized in that**
the busbar closure (34 - 38) is supported at at least one adjacent control panel (12, 14).

4. A method in accordance with claim 1, claim 2 or claim 3,
**characterized in that**
a support element (30) is used which has the at least one busbar closure (34 - 38).

5. Use of a busbar closure (33 - 38) comprising a base body into which an internal thread is formed at the upper side, wherein the internal thread is electrically insulated with respect to the outer periphery and to the lower side of the base body, in a method in accordance with at least one of the preceding claims.

6. Use of a busbar closure (33 - 38) comprising a base body which comprises insulating material having a centrally disposed connection thread (39) for a screw connection to the busbar (18) in a method in accordance with at least one of the preceding claims 1 to 4.

7. Use in accordance with claim 5 or claim 6,
**characterized in that**
the internal thread (39) is formed into a threaded insert (41) which is inserted into the base body (37) which consists of insulating material.

8. Use in accordance with claim 5, claim 6 or claim 7,
**characterized in that**
the busbar closure having a base body, a connection thread and a connection cone has an identical structure to the electrical leadthrough (22) in the intended control panel, with the high-voltage conductor being replaced by an element of insulating material (24) of the same type.

9. Use in accordance with at least one of the claims 5 to 8,
**characterized in that**
the busbar closure (33 - 38) has a fastening means (43) for a support element.

10. Use in accordance with at least one of the claims 5 to 9,
**characterized in that**
the busbar closure (33 - 38) has a connection cone (37) which is designed to close the opening in an adapter (20) of the busbar insulated by a solid in a sealed and electrically insulated manner.

11. A busbar closure (33 - 38) for use in a method in accordance with any one of the claims 1 to 4 comprising a base body (35) into which an internal thread (39) is formed at the upper side, wherein the internal thread is electrically insulated with respect to the outer periphery and to the lower side of the base body (35),
or which comprises a base body of insulating material which is provided with a centrally disposed connection thread (39) for a screw connection to the busbar (18),
**characterized in that**
the busbar closure (33 - 38) has a fastening flange (43) as a fastening means for assembly in a support element.

12. A support element (30) comprising
a support body (32) to which at least one busbar closure (34 - 38) in accordance with claim 11 is fastened.

13. A support element in accordance with claim 12,
**characterized in that**
it has at least one supporting carrier (40, 42) for supporting the support element (30) at adjacent control panels (12, 14).

14. A combination of at least one control panel for a switchgear of medium-voltage technology or high-voltage technology and a support element in accordance with at least one of the preceding claims 12 or 13 having a plurality of busbar closures (33 - 38),
**characterized in that**
the busbar closures (33 - 38) of the support element (30) are provided at the support body (30) at the spacing of the busbar connectors of the intended control panel.

15. A combination in accordance with claim 14,
**characterized in that**
the support element (30) has at least one supporting carrier (44, 46) for supporting the support element (30) at adjacent control panels (12, 14), with the length of said supporting carrier being larger than the width of the control panel.

16. A combination in accordance with claim 15,
**characterized in that**
the supporting carrier (40, 42) has a U-section (44, 46) which can be placed onto a carrier section (48, 50) of the control panel.

## Revendications

1. Procédé pour l'exploitation d'une installation de commutation (10) en technique à moyenne tension ou haute tension, qui inclut plusieurs champs de commutation (12, 14, 16), lesquels sont reliés les uns aux autres de manière à conduire l'électricité via au moins un rail collecteur (18) isolé par des matériaux solides, dans lequel l'installation de commutation (10) est commutée sans courant lors de la constatation qu'un champ de commutation présente un défaut, le champ de commutation défectueux est démonté, après démontage du rail collecteur (18) qui assure la liaison électrique avec celui-ci, réparé et à nouveau monté,
**caractérisé en ce que** le même rail collecteur (18), après démontage du champ de commutation défectueux, est à nouveau monté de manière à conduire l'électricité, en fixant sur le rail collecteur (18) une fermeture de rail collecteur (34-38) en lieu et place du champ de commutation démonté, la fermeture permettant un montage électriquement conducteur du rail collecteur, et **en ce que** l'installation de commutation (10) est mise à nouveau en service après montage du rail collecteur sans le champ de commutation défectueux.

2. Procédé pour la mise en service d'une installation de commutation (10) en technique à moyenne tension ou haute tension, qui inclut plusieurs champs de commutation (12, 14, 16) agencés les uns à côté des autres, qui sont reliés les uns aux autres de manière à conduire l'électricité via au moins un rail collecteur (18) isolé par des matériaux solides,
**caractérisé en ce que**
dans l'installation de commutation (10) il se forme une lacune avec la largeur d'au moins un champ de commutation prévu, et dans lequel pour une mise en service de l'installation de commutation, le rail collecteur (18) est monté de manière à conduire l'électricité dans la zone de la lacune, en fixant sur le rail collecteur (18) une fermeture de rail collecteur (34-38) en lieu et place dudit au moins un champ de commutation, la fermeture permettant un montage électriquement conducteur du rail collecteur.

3. Procédé selon la revendication 1 ou 2,
**caractérisé en ce que** la fermeture de rail collecteur (34-38) est soutenue sur au moins un champ de commutation voisin (12, 14).

4. Procédé selon la revendication 1, 2 ou 3,
**caractérisé en ce que** l'on utilise un élément de soutien (30) qui comprend ladite au moins une fermeture de rail collecteur (34-38).

5. Utilisation d'une fermeture de rail collecteur (33-38), constituée d'un corps de base dans lequel un taraudage est ménagé dans la face supérieure, ledit taraudage étant électriquement isolé vis-à-vis de la périphérie extérieure et de la face inférieure du corps de base, dans un procédé selon l'une au moins des revendications précédentes.

6. Utilisation d'une fermeture de rail collecteur (33-38), constituée d'un corps de base en matériau isolant avec un taraudage de raccordement (39) situé au milieu pour le vissage avec le rail collecteur (18), dans un procédé selon l'une au moins des revendications 1 à 4.

7. Utilisation selon la revendication 5 ou 6,
**caractérisé en ce que** le taraudage (39) est ménagé dans un insert fileté (41) qui est mis en place dans le corps de base (37), celui-ci étant en matériau isolant.

8. Utilisation selon la revendication 5, 6 ou 7,
**caractérisé en ce que** la fermeture de rail collecteur avec corps de base, pas de vis de raccordement et cône de raccordement est de structure analogue à la traversée électrique (22) dans le champ de commutation prévu, dans laquelle le conducteur à haute tension est remplacé par un élément de même type en matériau isolant (24).

9. Utilisation selon l'une au moins des revendications 5 à 8,
**caractérisé en ce que** la fermeture de rail collecteur (33-38) comprend un moyen de fixation (43) pour un élément de soutien.

10. Utilisation selon l'une au moins des revendications 5 à 9,
**caractérisé en ce que** la fermeture de rail collecteur (33-38) comprend un cône de raccordement (37) qui est réalisé de manière à obturer de façon étanche et électriquement isolé l'ouverture dans un adaptateur (20) du rail collecteur isolé par matériau solide.

11. Fermeture de rail collecteur (33-38) à utiliser dans un procédé selon l'une des revendications 1 à 4, constituée d'un corps de base (35) dans lequel un taraudage (39) est ménagé au niveau de la face supérieure, ledit taraudage étant électriquement isolé vis-à-vis de la périphérie extérieure et de la face inférieure du corps de base (35), ou constituée d'un corps de base en matériau isolant qui est pourvu d'un pas de vis de raccordement (39) situé au milieu pour le vissage avec le rail collecteur (18),
**caractérisé en ce que** la fermeture de rail collecteur (33-38) comprend une bride de fixation (43) à titre de moyen de fixation pour le montage dans un élément de soutien.

12. Élément de soutien (30), incluant
un corps de base (32) sur lequel est fixée au moins une fermeture de rail collecteur (34-38) selon la revendication 11.

13. Élément de soutien selon la revendication 12,
**caractérisé en ce que** celui-ci comprend au moins un support de soutien (40,42) pour soutenir l'élément de soutien (30) sur des champs de commutation voisins (12, 14).

14. Combinaison d'au moins un champ de commutation pour une installation de commutation en technique à moyenne tension ou haute tension, et d'un élément de soutien selon l'une au moins des revendications précédentes 12 ou 13, avec plusieurs fermetures de rail collecteur (33-38), **caractérisé en ce que** les fermetures de rail collecteur (33-38) de l'élément de soutien (30) sont prévues à distance des fermetures de rail collecteur du champ de commutation prévu sur le corps de soutien (30).

15. Combinaison selon la revendication 14,
**caractérisé en ce que** l'élément de soutien (30) comprend au moins un support de soutien (44, 46) pour le soutien de l'élément de soutien (30) sur des champs de commutation voisins (12, 14), dont la longueur est plus grande que la largeur du champ de commutation.

16. Combinaison selon la revendication 15,
**caractérisé en ce que** le support de soutien (40, 42) comprend un profilé en U (44, 46), qui est susceptible d'être posé sur un profilé porteur (48, 50) du champ de commutation.
